(19) Europäisches Patentamt
European Patent Office
Office européen des brevets

(11) Veröffentlichungsnummer: **0 106 106**
**B1**

(12) # EUROPÄISCHE PATENTSCHRIFT

(45) Veröffentlichungstag der Patentschrift: **26.11.86**

(21) Anmeldenummer: **83108719.2**

(22) Anmeldetag: **05.09.83**

(51) Int. Cl.⁴: **A 01 N 43/653,** A 01 N 59/16, A 01 N 59/18, A 01 N 59/20 // (A01N59/20, 43:653), (A01N59/18, 43:653), (A01N59/16, 43:653)

(54) **Fungizide Mittel.**

(30) Priorität: **18.09.82 DE 3234624**

(43) Veröffentlichungstag der Anmeldung: **25.04.84 Patentblatt 84/17**

(45) Bekanntmachung des Hinweises auf die Patenterteilung: **26.11.86 Patentblatt 86/48**

(84) Benannte Vertragsstaaten: **AT BE CH DE FR GB IT LI NL SE**

(56) Entgegenhaltungen:
**DE-A-3 116 607**
**FR-A-2 332 707**

**CHEMICAL ABSTRACTS, Band 93, Nr. 13, 29. September 1980, Seite 177, Zusammenfassung 126.916S, Columbus, Ohio, US, V. SEIDL: "Effect of some fungicides on the russeting of the cultivar Golden Delicious"**
**GAS REGISTRY HANDBOOK, Number Section, 1980, Supplement, Part 2, Columbus, Ohio, US, Seite 1698**

(73) Patentinhaber: **BAYER AG, Konzernverwaltung RP Patentabteilung, D-5090 Leverkusen 1 Bayerwerk (DE)**

(72) Erfinder: **Brandes, Wilhelm, Dr., Eichendorffstrasse 3, D-5653 Leichlingen (DE)**
Erfinder: **Kaspers, Helmut, Dr., Steglitzer Strasse 4, D-5090 Leverkusen (DE)**
Erfinder: **Reinecke, Paul, Dr., Lessingstrasse 11, D-5090 Leverkusen 3 (DE)**
Erfinder: **Scheinpflug, Hans, Dr., Am Thelenhof 15, D-5090 Leverkusen (DE)**
Erfinder: **Krämer, Wolfgang, Dr., Am Eckbusch 39/45, D-5600 Wuppertal 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1986

**Beschreibung**

Die vorliegende Erfindung betrifft neue fungizide Wirkstoffkombinationen aus speziellen bekannten 1,2,4-Triazolyl-alkanolen und anderen bekannten fungiziden Wirkstoffen.

Es ist bereits allgemein bekannt, daß Mischungen enthaltend 1,2,4-Triazol-Derivate, Hie z.B. das 1-(4°Chlorphenoxy)-3,3-dimethyl-1-(1,2,4-triazol-1-yl)-2-butanon, in Kombination mit anderen bekannten Fungiziden eine beachtlich höhere Wirkung als die Einzelkomponenten aufweisen (vgl. z.B. die Deutsche Offenlegungsschrift 25 52 967 ). Die Wirksamkeit dieser Wirkstoffmischungen ist jedoch nicht auf ellen Anwendungsgebieten voll befriedigend.

Es wurde nun gefunden, daß neue Wirkstoffkombinationen aus speziellen 1,2,4-Triazolyl-alkanolen der Formel

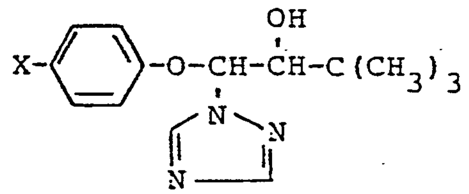 (I)

in welcher
X für Chlor oder für Phenyl steht,
und
(A) Salzen von Schwermetallen aus der Reihe anorganischer Kupfersalze, organischer Zinn- und organischer Quecksilber-Verbindungen,
eine besonders hohe fungizide Wirksamkeit aufweisen.

Überraschenderweise ist die fungizide Wirkung der erfindungsgemäßen Wirkstoffkombinationen wesentlich höher als die Wirkung der Einzelkomponenten und gegebenenfalls auch als die Summe der Einzelkomeonenten (synergistischer Effekt). Die Auffindung dieser Kombinationen aus speziellen 1,2,4-Triazolyl-alkanolen der Formel (I) und den Wirkstoffen der oben angegebenen Gruppe (A) eine wertvolle Bereicherung der Technik dar.

Die für die erfindungsgemäße Kombination speziell zu verwendenden 1,2,4-Triazolyl-alkanole sind durch die obige Formel (I) eindeutig definiert; unter diese Formel fallen die beiden Verbindungen
(Ia): X = Cl; Kurzbezeichnung TRIADIMENOL
(Ib): X =

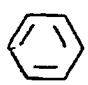

Kurzbezeichnung BITERTANOL.

Die genannten Verbindungen sind allgemein bekannt (vgl. hierzu die Deutschen Patentschriften 22 01 063 und 23 24 010 bzw. die entsprechenden US-Patentschriften 3 912 752 und 3 952 002).

Als Mischungskomponente (A) werden Salze von Schwermetallen verwendet. Bevorzugt verwendet werden anorganische Kupfersalze, wobei Kupfersulfat und Kupferchlorid und entsprechende basische Salze, wie z.B. das Kupferoxidchlorid, besonders zu nennen sind. Die Verbindungen sind allgemein bekannt. Weiterhin können als Mischungskomponente der Gruppe (A) Organo-zinn- und Organo-quecksilber-Verbindungen Verwendung finden. Zu nennen sind hier vorzugsweise das Triphenylzinn-acetat (Kurzbezeichnung FENTINACETAT) und das Methoxyethyl-quecksilber-silikat. Auch diese Verbindungen sind allgemein bekannt (vgl. hierzu z.B. die Angaben in R. Wegler, "Chemie der Pflanzenschutz- und Schädlingsbekämpfungsnittel", Band 2, Seiten 149 und 144, Springer-Verlag, Berlin/Heidelberg/New York, 1970). Zu einer Wirkstoffkombination aus den 1,2,4-Triazolyl-al-kanolen der Formel (I) und den Wirkstoffen aus der Gruppe (A) können noch weitere Wirkstoffe (z.B. als Drittkomponente) hinzukommen.

Die Gewichtsverhältnisse der Wirkstoffgruppen in den Wirkstoffkombinationen können in relativ großen Bereichen schwanken. In allgemeinen entfallen auf 1 Gew.-Teil an 1,2,4-Triazol-alkanol der Formel (I) 0,2 bis 200 Gew.-Teile Wirkstoff aus der Wirkstoffklasse (A), besonders bevorzugt 0,5 bis 50 Gew.-Teile.

Die erfindungsgemäßen Wirkstoffkombinationen weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffe in den zur Bekämpfung von Pflanzenkrankheiten notwenigen Konzentrationen erlaubt eine Behandlung von oberirdischen pflanzenteilen, von Pflanz- und Saatgut, und des

Bodens.

Die erfindungsgemäßen Wirkstoffkombinationen haben ein sehr breites Wirkungsspektrum und können angewandt werden gegen parasitäre Pilze, die oberirdische Pflanzenteile befallen oder die Pflanzen vom Boden her angreifen, sowie samenübertragbare Krankheitserreger. Besonders praktische Bedeutung haben solche Wirkstoffkombinationen als Saatgutbeizmittel gegen phytopathogene Pilze, die mit dem Saatgut übertragen werden oder im Boden vorkommen und von dort die Kulturpflanzen befallen. Dabei handelt es sich um Keimlingskrankheiten, Wurzelfäulen, Stengel-, Halm-, Blatt-, Blüten-, Frucht- und Samenkrankheiten, die insbesondere durch Tilletia-Urocystis-, Ustilago-, Septoria-, Typhula-, Rhynchosporium-, Helminthosporium- und Fusarium-Arten hervorgerufen werden. Durch die systemische Wirkung des einen Mischungspartners werden die Pflanzen auch oft längere Zeit nach der Beizung noch vor Krankheitserregern geschützt, die verschiedene Teile des Sprosses angreifen können, z.B. echte Mehltaupilze und Rostpilze. Die Wirkstoffkombinationen können daneben auch als Bodenbehandlungsmittel gegen phytopathogene Pilze eingesetzt werden und wirken gegen Wurzelfäulen und Tracheomykosen, die z.B. durch Krankheitserreger der Gattungen Pythium, Verticillium, Phialophora, Rhizoctonia, Fusarium und Thielaviopsis verursacht werden.

Die erfindungsgemäßen Wirkstoffkombinationen zeigen aber auch hervorragende Wirkung bei direkter Applikakation auf die oberirdischen Pflanzenteile gegen Krankheitseerreger auf verschiedenen Kulturpflanzen, wie echte Mehltaupilze (Erysiphe-, Uncinula-, Sphaerotheca-, Podosphaera-Arten, Leveillula taurica), Rostpilze, Venturia-Arten, Cercospora-Arten, Alternaria-Arten, Botrytis-Arten, Phytophthora-Arten, Peronospora-Arten, Pyricularia oryzae, Pellicularia sasakii.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hülmlassen für Saatgut, ferner in Formulierungen mit Brennsätzen, wie Räucherpatrcnen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln; also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthalinc, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgierund/oder schaumerzeugende Mittel kommen in Frage: z.B. nichtionogene und anionische Emulgatoren, wie Polyoxyäthylen-Fettsäure-Ester, polyoxyäthylen-Fettalkohol-Äther, z.B. Alkylarylpolyglvkol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, polyvinylalkohol, polyvinylacetat.

Es können Farbstoffe, wie anorganische pigmente, z.B. Eisenoxid, Titanoxid, Ferrocyanblau und organische Farbstoffe, wie Alizarin-, Azo - und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen oder in den verschiedenen Anwendungsformen in Mischung mit anderen bekannten Wirkstoffen vorliegen, wie Pungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffe können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher weise, z.B. durch Gießen, Tauchen, Spritzen, Sprüen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentretionen in den Anwendungformen in

einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02 %, am Wirkungsort erforderlich.

Zur Erläuterung dienen die nachfolgenden Anwendungsbeispiele. Beispielhaft in erfindungsgemäßen Wirkstoffkombinationen zu verwendende Wirkstoffe sind in der nachfolgenden Aufstellung aufgelistet:

| Wirkstoff Nr. | Formel | Bezeichnung | Literatur |
|---|---|---|---|
| 1 | Ia | TRIADIMENOL | DE-OS 23 24 010<br>US-PS 3 952 002 |
| 2 | Ib | BITERTANOL | wie bei Verbindung 1 |
| 3 | $CuSO_4 \cdot 5H_2O$ | (Kupfersulfat) | Wegler, loc. cit., S. 46 |
| 4 | $3Cu(OH)_2 \cdot CuCl_2 \cdot xH_2O$ | (Kupferoxichlorid) | Wegler, loc. cit., S. 47 |
| 5 | (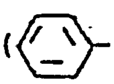-)$_3$Sn-O-CO-$CH_3$ | FENTINACETAT | Wegler, loc. cit., S. 149 |
| 6 | $CH_3$-O-$C_2H_4$-Hg-Silikat | - | Wegler, loc. cit., S. 144 |

**Beispiel A**

Venturia-Test (Apfel) / protektiv
Lösungsmittel: 4,7 Gewichtsteile Aceton
Emulgator: 0,3 Gewichtsteile Alkyl-aryl-polyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Konidiensuspension des Apfelschorferregers (Venturia inaequalis) inokuliert und verbleiben dann 1 Tag bei 20°C und 100 % relativer Luftfeuchtigkeit in einer Inkubationskabine.

Die Pflanzen werden dann im Gewächshaus bei 20°C und einer relativen Luftfeuchtigkeit von ca. 70 % aufgestellt.

12 Tage nach der Inokulation erfolgt die Auswertung.

**Tabelle A**

Venturia-Test (Apfel) / protektiv

| Wirkstoff | | Befall in % bei einer Wirkstoffkonzentration von | |
|---|---|---|---|
| 2 (BITERTANOL) (bekannt) | | 0,0001 % | 44 |
| 5 (FENTINACETAT) (bekannt) | | 0,0001 % | 62 |
| 4 (Kupferoxichlorid) (bekannt) | | 0,0005 % | 63 |
| Mischung aus 2 und 5 (Mischungsverhältnis 1:1) | + | 0,0001 %<br>0,0001 % | 10 |
| Mischung aus 2 und 4 (Mischungsverhältnis 1:5) | + | 0,0001 %<br>0,0005 % | 22 |

**Beispiel B**

Septoria nodorum-Test (Weizen) / Saatgutbehandlung

Die Anwendung der Wirkstoffe erfolgt als Trockenbeizmittel. Sie werden zubereitet durch Abstrecken des jeweiligen Wirkstoffes mit Gesteinsmehl zu einer feinpulverigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Den Weizen sät man mit 2 x 100 Korn 1 cm tief in eine Standarderde und kultiviert ihn in einem Gewächshaus bei einer Temperatur von ca. 15°C in Saatkästen, die täglich 15 Stunden dem Licht ausgesetzt werden.

Ca. 3 Wochen nach der Aussaat erfolgt die Auswertung der Pflanzen auf Symptome der Septoriose.

**Tabelle B**

Septoria nodorum-Test (Weizen) / Saatgutbehandlung

| Wirkstoff | Wirkstoffaufwandmenge in mg / kg Saatgut | kranke Pflanzen in % der insgesamt aufgelaufenen Pflanzen |
|---|---|---|
| ungebeizt | - | 99,4 |
| 1 (TRIADIMENOL) (bekannt) | 200 | 23,7 |
| 2 (BITERTANOL) (bekannt) | 200 | 46,2 |
| 6 (Methoxyethyl-quecksilbersilikat) (bekannt) | 17,5 Hg+) | 80,2 |
| Mischung aus 1 und 6 | 200 + 17,5 Hg+) | 6,7 |
| Mischung aus 2 und 6 | 200 + 17,5 Hg+) | 7,7 |

+) Anmerkung: Wie bei allen Quecksilber enthaltendenden Pflanzenschutzmitteln üblich, sind die Aufwandmengen auf mg Quecksilber-Metall bezogen angegeben.

**Beispiel C**

Fusarium culmorum-Test (Weizen) / Saatgutbehandlung

Die Anwendung der Wirkstoffe erfolgt als Trockenbelzmittel. Sie werden zubereitet durch Abstrecken des jeweiligen Wirkstoffes mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Den Weizen sät man mit 2 x 100 Korn 1 cm tief in eine Standarderde und kultiviert ihn im Gewächshaus bei einer Temperatur von ca. 18°C in Saatkästen, die täglich 15 Stunden dem Licht ausgesetzt werden.

Ca. 3 Wochen nach der Aussaat erfolgt die Auswertung der Pflanzen auf Symptome.

**Tabelle C**

Fusarium culmorum-Test (Weizen) / Saatgutbehandlung

| Wirkstoff | Wirkstoff-aufwand-menge in mg/kg Saatgut | kranke Pflanzen in % der insgesamt aufgelaufenen Pflanzen |
|---|---|---|
| ungebeizt | - | 31,5 |
| 1 (TRIADIMENOL) (bekannt) | 200 | 26,5 |
| 4 (Kupferoxichlorid) (bekannt) | 100 | 28,0 |
| Mischung aus 1 und 4 (Mischungsverhältnis 1:0,5) | 200 +100 | 17,0 |

**Patentansprüche**

1. Fungizide Mittel, gekennzeichnet durch einen Gehalt an einei Wirkstoffkombination aus speziellen 1,2,4-Triazolyl-alkanolen der Formel

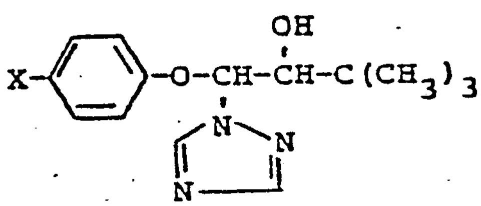

(I)

in welcher
X für Chlor oder für Phenyl steht,
und
(A) Salzen von Schwermetallen aus der Reihe anorganischer Kupfersalze, organischer Zinn- und organiscner Quecksilber-Verbindungen.

2. Fungizide Mittel gemäß Anspruch 1, dadurch gekennzeichnet, daß in der Wirkstoffkombination das Gewichtsverhältnis von 1,2,4-Triazolyl-alkanolen zu den Wirkstoffen aus der Wirkstoffklasse (A) zwischen 1:0,2 und 1:200 liegt.

3. Fungizide Mittel gemäß Anspruch, dadurch gekennzeichnet, dsß das Gewichtsverhältnis zwischen 1:0,5 und 1:50 liegt.

4. Verfahren zur Bekämpfung von Pilzen, dadurch gekennzeichnet, daß man eine Wirkstoffkombination gemäß Anspruch 1 auf Pilze oder deren Lebensraum einwirken läßt.

5. Verwendung von Wirkstoffkombinationen gemäß Anspruch 1 zur Bekämpfung von Pilzen.

6. Verfahren zur Herstellung von fungiziden Mitteln, dadurch gekennzeichnet, daß man eine Wirkstoffkombination gemäß Anspruch 1 mit Streckmitteln und/oder oberflächenektiven Mitteln vermischt.

## Claims

1. Fungicidal agents, characterised in that they contain an active compound combination of specific 1,2,4-triazolylalkanols of the formula

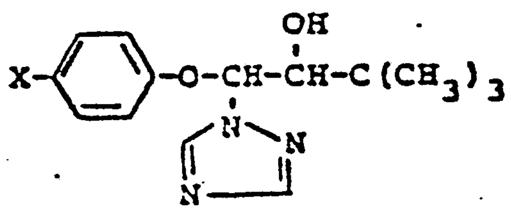

(I)

in which
X represents chlorine or phenyl and
(A) salts of heavy metals of the series comprising inorganic copper salts, organic tin compounds and organic mercury compounds.

2. Fungicidal agents according to Claim 1, characterised in that in the active compound combination the weight ratio of 1,2,4-triazolyl-alkanols to the active compounds of active compound class (A) is between 1:0.2 and 1:200.

3. Fungicidal agents according to Claim 1, characterised in that the weight ratio is between 1:0.5 and 1:50.

4. Process for combating fungi, characterised in that an active compound combination according to Claim is allowed to act on fungi or their habitat.

5. Use of active compound combinations according to Claim for combating fungi.

6. Process for the preparation of fungicidal agents, characterised in that an active compound combination according to Claim is mixed with extenders and/or surface-active agents.

## Revendications

1. Compositione fongicides, caractérisées par une teneur en une association de substances actives formée de 1,2,4-triazolylalcanols spéciaux de formule

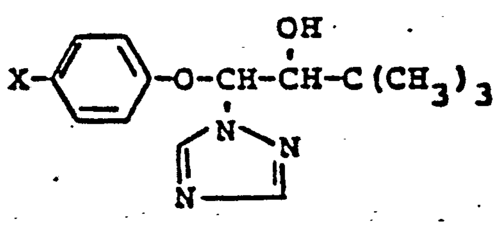

(I)

dans laquelle
X désigne le chlore ou le groupe phényle, et
(A) de sels de métaux lourds de la série des sels inorganiques de cuivre, des composés organiques d'étain et des conposés organiques de mercure.

2. Compositions fongicides suivant la revendication 1, caractérisées en ce que dans l'association de substances actives, le rapport en poids des 1,2,4-triazolylacanols aux substances actives de la classe (A) de substances actives se situe entre 1:0,2 et 1:200.

3. Compositions fongicides suivant la revendication 1, caractérisées en ce que le rapport en poids se situe entre 1:0,5 et 1:50.

4. Procéde pour combattre des champignons, caractérisé en ce'qu on fait agir une association de substances actives suivant la revendication 1 sur des champignons ou sur leur milieu .

5. Utilisation d'associations de substances actives suivant la revendication 1 pour combattre des champignons.

6. Procédé de préparation de compositions fongicides, caractérisé en ce qu'on mélange une association de substances actives suivant la revendication 1 avec des diluants et/ou des agents tensio-actifs.